# EUROPÄISCHE PATENTANMELDUNG

(11) **EP 3 628 816 A1**
(43) Veröffentlichungstag der Anmeldung: **01.04.2020**
(21) Anmeldenummer: 18196559.1
(22) Anmeldetag: 25.09.2018
(51) Int. Cl.: F01B 21/00, F01C 1/12, F01C 19/02, F01D 13/00, F02B 41/10, F02B 53/04, F02B 53/14, F02D 25/04

(54) **VERBRENNUNGSMOTOR MIT VERSTELLBARER VERKNÜPFUNG VON DESSEN MOTOREINHEITEN**

(71) Anmelder: Fuelsave GmbH, 69190 Walldorf (DE)
(72) Erfinder: HOFFMANN, Dirk, 21244 Buchholz i.d.N. (DE)
(74) Vertreter: Ridderbusch, Oliver

(57) **Zusammenfassung**

Ein Verbrennungsmotor umfasst mehrere Motoreinheiten (50A-50C) mit jeweils einem Arbeitsraum (11), in dem zwei Drehkolben (20, 30) ineinandergreifend angeordnet sind und so den Arbeitsraum (11) in einen Einströmbereich (12) und einen Ausströmbereich (13) teilen. Jede Motoreinheit umfasst einen verschließbaren Einlass (62A-62C) zum Einströmbereich (12) und einen verschließbaren Abgas-Auslass (64A-64C). Der Verbrennungsmotor umfasst weiterhin ein Zuleitungsrohr (60) zu den Einlässen (62A-62C) und ein Abgassammelrohr (66), das mit den Abgas-Auslässen (64A-64C) verbunden ist, so dass die Motoreinheiten (50A-50C) parallel zueinander verbunden sind. Weiterhin umfasst der Verbrennungsmotor Abgasleitungen (63A, 63B), welche die Motoreinheiten (50A, 50B) seriell miteinander verbinden. Abhängig von einer gewünschten Leistungsausgabe betreibt eine Steuereinrichtung (70) einige der Motoreinheiten (50B, 50C) entweder als Verbrennungsmotoren, wobei der jeweilige Einlass (62B-62C) geöffnet wird, oder als Entspannungsmotoren, wobei der jeweilige Einlass (62B-62C) geschlossen bleibt und die jeweiligen Drehkolben (20, 30) vielmehr durch Abgas, das über die jeweilige Abgasleitung (63A, 63B) einströmt, angetrieben werden.

## Beschreibung

Die vorliegende Erfindung betrifft gemäß Anspruch 1 einen Verbrennungsmotor und gemäß Anspruch 15 ein Verfahren zum Betreiben eines Verbrennungsmotors.

Die Erfindung geht aus von einem Verbrennungsmotor, der ein oder mehrere Drehkolbenmotoreinheiten umfasst. Aus beispielsweise DE 10 2007 019 958 A1 ist ein Drehkolbenmotor bekannt, welcher bei einigen Ausführungsformen auch als Verbrennungsmotor fungieren kann. Bei einem solchen Motor treibt der Druck, der durch die Verbrennung entsteht, zwei ineinandergreifende Drehkolben an. In DE 10 2007/019958 A1 wird zudem eine Anordnung beschrieben, bei der zwei Drehkolbenmotoreinheiten seriell hintereinander durchströmt werden.

Allgemein soll ein Verbrennungsmotor, der durch Drehkolbenmotoren aufgebaut ist, über einen möglichst großen Leistungsbereich einen besonders hohen Wirkungsgrad aufweisen.

Als eine **Aufgabe** der Erfindung kann angesehen werden, einen besonders effizienten Verbrennungsmotor und ein Verfahren zum Betreiben desselben anzugeben.

Diese Aufgabe wird durch den Verbrennungsmotor mit den Merkmalen des Anspruchs 1 und das Verfahren mit den Merkmalen des Anspruchs 15 gelöst.

Vorteilhafte Varianten des erfindungsgemäßen Verbrennungsmotors und des erfindungsgemäßen Verfahrens sind Gegenstand der abhängigen Ansprüche und werden außerdem in der folgenden Beschreibung erläutert.

Erfindungsgemäß umfasst ein Verbrennungsmotor mehrere Motoreinheiten. Jede Motoreinheit hat einen Arbeitsraum, in dem zwei Drehkolben ineinandergreifend angeordnet sind und so den Arbeitsraum in einen Einströmbereich und einen Ausströmbereich teilen. Dabei sind die Drehkolben von durchströmendem Fluid antreibbar. Bei dem Fluid handelt es sich um Abgas, dass durch die Verbrennung eines Kraftstoff-Luft-Gemischs in der jeweiligen Motoreinheit oder in einer Komponente vor der Motoreinheit entsteht. Jede Motoreinheit umfasst außerdem einen verschließbaren Einlass, der zum Einströmbereich führt, und einen verschließbaren Abgas-Auslass, der vom Ausströmbereich wegführt. Der erfindungsgemäße Verbrennungsmotor umfasst weiterhin ein Zuleitungsrohr, welches mit den Einlässen verbunden ist, und ein Abgassammelrohr, das mit den Abgas-Auslässen verbunden ist, so dass die Motoreinheiten parallel zueinander verbunden sind. Außerdem umfasst der Verbrennungsmotor Abgasleitungen, die jeweils von einem Ausströmbereich einer der Motoreinheiten zu einem Einströmbereich einer anderen der Motoreinheiten führen, womit eine serielle Verbindung zwischen den Motoreinheiten hergestellt ist. Hierbei kann eine erste der Motoreinheiten auch bloß über eine Abgasleitung zum Wegführen von Abgas verfügen, ohne dass eine Abgasleitung einer anderen Motoreinheit in diese erste Motoreinheit mündet. Entsprechend kann in eine letzte der Motoreinheiten auch bloß eine Abgasleitung münden, ohne dass hier eine Abgasleitung wegführt. Alternativ können aber auch die erste und letzte Motoreinheit gleich wie die übrigen Motoreinheiten gebildet sein, womit insbesondere die Reihenverbindung eine Schleife ergeben kann. Der Verbrennungsmotor umfasst auch eine Steuereinrichtung, welche dazu eingerichtet ist, zumindest einen Teil der Motoreinheiten abhängig von einer gewünschten Leistungsausgabe entweder als Verbrennungsmotor zu betreiben, wobei der Einlass der jeweiligen Motoreinheit zum Zuleitungsrohr geöffnet wird, oder als Entspannungsmotor zu betreiben, wobei der jeweilige Einlass geschlossen bleibt und die jeweiligen Drehkolben vielmehr durch Abgas, das über die jeweilige Abgasleitung einströmt, angetrieben werden.

Bei dem erfindungsgemäßen Verfahren zum Betreiben eines Verbrennungsmotors ist ein oben beschriebener Verbrennungsmotor vorgesehen. Bei dem Verfahren stellt die Steuereinrichtung abhängig von einer gewünschten Leistungsausgabe variabel ein, wie viele der Motoreinheiten als Verbrennungsmotoren betrieben werden, wobei der Einlass der jeweiligen Motoreinheit zum Zuleitungsrohr geöffnet wird, oder als Entspannungsmotoren betrieben werden, wobei der jeweilige Einlass geschlossen bleibt und die jeweiligen Drehkolben vielmehr durch Abgas, das über die jeweilige Abgasleitung einströmt, angetrieben werden.

Die Erfindung erlaubt es, Motoreinheiten entweder parallel oder seriell zu nutzen. Hierzwischen kann im laufenden Betrieb gewechselt werden, wozu allein die entsprechenden verschließbaren Leitungen entweder geöffnet oder geschlossen werden müssen. Dadurch unterscheidet sich der Betrieb des erfindungsgemäßen Verbrennungsmotor grundlegend vom Betrieb üblicher Mehrzylinder-Hubkolbenmotoren: Bei diesen werden bei Teillast einige Zylinder deaktiviert und tragen nicht zum Vortrieb bei; durch ihre Kopplung an den Antriebsstrang werden sie mitgeschleppt, ohne positive Wirkung auf den Wirkungsgrad. Hingegen werden bei der Erfindung auch diejenigen Motoreinheiten genutzt, in denen bei einem Teillastbetrieb keine Verbrennung erfolgt (bzw. bei einer äußeren Gemischbildung und einer der Motoreinheit vorgelagerten Zündung: diejenigen Motoreinheiten, deren Einlass von der Brennkammer geschlossen bleibt). Diese Motoreinheiten können bei der Erfindung von Abgas der anderen Motoreinheiten durchströmt werden und werden somit vom Abgasdruck bzw. der Abgasenergie angetrieben.

In dieser Weise bewirkt der Verbrennungsmotor bei Teillast gleich zwei relevante Vorteile: So kann der Abgasdruck von einer Motoreinheit noch durch eine andere Motoreinheit genutzt werden, womit der Wirkungsgrad steigt. Außerdem ist die Anzahl an Motoreinheiten durch eine maximal gewünschte Leistung eines Volllastbetriebs vorgegeben - daher sind die Motoreinheiten, die im Teillastbetrieb als Entspannungsmotoren genutzt werden, ohnehin vorhanden und würden ansonsten mitgeschleppt werden. Bei vorgegebener Maximalleistung sind daher keine wesentlichen apparativen Mehrkosten erforderlich, um eine erheblich gesteigerte Effizienz im Teillastbetrieb zu erreichen.

Die Steuereinrichtung kann dazu eingerichtet sein, abhängig von einer gewünschten Ausgabeleistung eine variable Anzahl an Motoreinheiten als Verbrennungsmotoren zu betreiben und die übrigen (oder einen Teil der übrigen) Motoreinheiten als Entspannungsmotoren zu betreiben. Insbesondere können für eine maximalmögliche Leistung alle Motoreinheiten als Verbrennungsmotoren betrieben werden und mit kleiner werdender Leistung können immer weniger Motoreinheiten als Verbrennungsmotoren und dafür als Entspannungsmotoren genutzt werden. Die Anzahl an Motoreinheiten kann gemäß der beabsichtigten Maximalleistung gewählt werden und kann beispielsweise mindestens drei oder vier oder auch mehr Motoreinheiten betragen.

Alle Motoreinheiten können mit einer gemeinsamen Antriebswelle gekoppelt sein. Insbesondere kann vorgesehen sein, dass jeweils einer der Drehkolben von jeder Motoreinheit mit der Antriebswelle gekoppelt ist. Über die Antriebswelle kann eine prinzipiell beliebige Vorrichtung angetrieben werden, beispielsweise ein Fahrzeug, ein Generator zur Stromerzeugung oder ein Schiff.

Für einige oder alle der Motoreinheiten kann jeweils eine Abgasleitung vorgesehen sein, die vom Ausströmbereich (also dem Bereich hinter den Drehkolben dieser Motoreinheit) zu einem Einströmbereich einer anderen Motoreinheit führt. Die Abgasleitungen können entweder direkt zum Einströmbereich oder über dazwischen befindliche Komponenten, beispielsweise eine Brennkammer, zum Einströmbereich führen. So wird eine serielle Verbindung erzeugt. Abgas kann von einer ersten Motoreinheit über die zugehörige Abgasleitung zur zweiten Motoreinheit geleitet werden, dort die Drehkolben antreiben und sodann entweder zur Abgassammelleitung ausgegeben werden oder über die nächste Abgasleitung zur dritten Motoreinheit geleitet werden (oder teilweise zur Abgassammelleitung und teilweise zur dritten Motoreinheit geleitet werden).

Die Steuereinrichtung kann dazu eingerichtet sein, den Abgas-Auslass einer der Motoreinheiten zum Abgassammelrohr zu schließen und Abgas allein über die zugehörige Abgasleitung zur darauffolgenden Motoreinheit zu leiten, wenn diese darauffolgende Motoreinheit als Entspannungsmotor betrieben wird. Etwas allgemeiner formuliert kann der Abgas-Auslass einer Motoreinheit weiter geschlossen werden und dadurch mehr Abgas über die zugehörige Abgasleitung zur darauffolgenden Motoreinheit geleitet werden, wenn diese darauffolgende Motoreinheit als Entspannungsmotor betrieben wird, verglichen mit dem Fall, dass diese darauffolgende Motoreinheit als Verbrennungsmotor betrieben wird. Konkret kann dies heißen, dass die Steuereinrichtung den Abgas-Auslass der ersten Motoreinheit zum Abgassammelrohr schließt, wenn die zweite Motoreinheit als Entspannungsmotor betrieben wird, oder zumindest mehr Abgas der ersten Motoreinheit zur zweiten Motoreinheit leitet als bei einem Betrieb der zweiten Motoreinheit als Verbrennungsmotor, d.h. Verbrennungsmotoreinheit.

Je nach Gestaltung der Motoreinheiten kann sich die Gestaltung des Zuleitungsrohrs unterscheiden. So kann vorgesehen sein, dass über das Zuleitungsrohr Frischluft oder ein Kraftstoff-Luft-Gemisch an die Motoreinheiten gegeben wird. Alternativ kann auch vorgesehen sein, dass ein Kraftstoff-Luft-Gemisch bereits im Zuleitungsrohr entzündet wird und die hierbei entstehenden Abgase über die verschließbaren Einlässe zu den Motoreinheiten gegeben werden.

Wird über das Zuleitungsrohr Frischluft (ohne Kraftstoff) zugeführt, so kann jede Motoreinheit eine Einspritzdüse zum Einspritzen von Kraftstoff umfassen, welcher innerhalb der Motoreinheit verbrannt wird. Mit der Einspritzdüse wird also Kraftstoff in einen Bereich zwischen dem verschließbaren Einlass und den Drehkolben eingespritzt. Dieser Bereich kann der Arbeitsraum der Drehkolben sein, oder auch eine optionale Brennkammer, die sich zwischen dem verschließbaren Einlass und dem Arbeitsraum befindet. Die Steuereinrichtung kann nun dazu eingerichtet sein, bei einem Betrieb einer Motoreinheit als Verbrennungsmotor Kraftstoff einzuspritzen und den Einlass zum Zuleitungsrohr zu öffnen, und bei einem Betrieb der Motoreinheit als Entspannungsmotor keinen Kraftstoff einzuspritzen und den Einlass zum Zuleitungsrohr nicht zu öffnen. Stattdessen wird der Abgas-Auslass einer jeweils vorhergehenden Motoreinheit zum Abgassammelrohr geschlossen, damit Abgas der vorhergehenden Motoreinheit über die zugehörige Abgasleitung zu dieser als Entspannungsmotor betriebenen Motoreinheit geleitet wird.

Wird alternativ über das Zuleitungsrohr ein Kraftstoff-Luft-Gemisch zugeführt, kann dieses wiederum im Arbeitsraum oder in einer optionalen Brennkammer verbrannt werden. Die Steuereinrichtung kann bei dieser Ausführung dazu eingerichtet sein, bei einem Betrieb einer Motoreinheit als Verbrennungsmotor über den Einlass das Kraftstoff-Luft-Gemisch einzuleiten und in dieser Motoreinheit zu verbrennen, und bei einem Betrieb einer Motoreinheit als Entspannungsmotor kein Kraftstoff-Luft-Gemisch über den verschließbaren Einlass einzulassen und stattdessen den Abgas-Auslass einer jeweils vorhergehenden Motoreinheit zu schließen, um Abgas der vorhergehenden Motoreinheit über die entsprechende Abgasleitung zu empfangen.

Zum Entzünden des Kraftstoffs kann jede Motoreinheit über eine Zündeinrichtung verfügen, die im Arbeitsraum oder der optionalen Brennkammer angeordnet ist. Die Zündeinrichtung kann zum Beispiel eine Zündkerze sein oder einen Laser zur Entzündung umfassen. Es kann prinzipiell auch eine Selbstzündung ohne Zündeinrichtung erfolgen. Der verwendete Kraftstoff kann prinzipiell beliebig sein, insbesondere ölhaltig, wie Benzin oder Diesel, oder auch Erdgas oder Wasserstoffgas umfassen. Das verbrannte Kraftstoff-Luft-Gemisch kann eine Mischung aus Kraftstoff und Frischluft oder auch eine Mischung aus Kraftstoff und Sauerstoffgas sein.

Bei einer alternativen Ausführungsform wird das Kraftstoff-Luft-Gemisch im Zuleitungsrohr entzündet. Hierdurch sind weniger Zündeinrichtungen erforderlich, insbesondere kann eine einzige Zündkerze am Zuleitungsrohr genügen. Ein Einleitungsventil zum Zuleitungsrohr hin kann geschlossen werden, wenn die Zündung im Zuleitungsrohr erfolgt. Diejenigen Motoreinheiten, die als Entspannungsmotoren betrieben werden, bleiben zum Zuleitungsrohr geschlossen. Allein die Motoreinheiten, die als Verbrennungsmotoren betrieben werden, werden nun zum Zuleitungsrohr geöffnet, so dass die Abgase, die dort durch Verbrennung entstehen, durch die geöffneten Einlässe in die jeweiligen Motoreinheiten einströmen und von dort über die Abgasleitungen weiter zu den Motoreinheiten geleitet werden, die als Entspannungsmotoren betrieben werden.

Die Auswahl, welche der Motoreinheiten als Entspannungsmotoren betrieben werden, kann so erfolgen, dass einer als Entspannungsmotor betriebenen Motoreinheit möglichst immer eine als Verbrennungsmotor betriebene Motoreinheit vorangeht. Die Steuereinrichtung kann für einen Teillastbetrieb, bei dem eine Hälfte der Motoreinheiten als Verbrennungsmotoren betrieben werden soll, solche Motoreinheiten zum Betrieb als Verbrennungsmotoren auswählen, dass sich zwischen zwei als Verbrennungsmotoren betriebenen Motoreinheiten stets eine als Entspannungsmotor betriebene Motoreinheit befindet. Beispielsweise können zumindest vier Motoreinheiten vorgesehen sein, wobei jeweils eine Abgasleitung von einer der Motoreinheiten zur jeweils nächsten Motoreinheit führt, und die Steuereinrichtung kann für einen Teillastbetrieb, bei dem zwei der vier Motoreinheiten als Verbrennungsmotoren betrieben werden, die erste und dritte Motoreinheit als Verbrennungsmotor betreiben und die zweite und vierte Motoreinheit als Entspannungsmotor betreiben.

Für einen Volllastbetrieb kann die Steuereinrichtung hingegen alle Motoreinheiten als Verbrennungsmotoren betreiben. Es ist auch ein Mischbetrieb möglich, bei dem der Einlass einer Motoreinheit geöffnet wird und diese Motoreinheit dennoch Abgas einer vorausgehenden Motoreinheit erhält. Für einen möglichst optimalen Wirkungsgrad kann es förderlich sein, je nach geforderter Leistungsausgabe einen Teil der Motoreinheiten in einem solchen Mischbetrieb zu nutzen. Bei Abwandlungen kann auch vorgesehen sein, dass anstelle des Betriebs als Entspannungsmotor der genannte Mischbetrieb genutzt wird.

In der Steuereinrichtung können Betriebseinstellungen hinterlegt sein, welche in Abhängigkeit der gewünschten Leistungsausgabe festlegen, wieviel Abgas von einer der Motoreinheiten zur jeweils nächsten geleitet wird und ob bzw. wieviel Kraftstoff in die jeweilige Motoreinheit eingeleitet wird.

Die Motoreinheiten können jeweils einen bewegbaren Verschlusskörper umfassen, welcher zwischen verschiedenen Positionen bewegbar ist, in denen er entweder den Abgas-Auslass zum Abgassammelrohr verschließt und die Abgasleitung zu einer darauffolgenden Motoreinheit freilässt, oder den Abgas-Auslass zum Abgassammelrohr freilässt und die Abgasleitung zu einer darauffolgenden Motoreinheit verschließt. Bei dieser Ausführung wird der verschließbare Auslass durch den Verschlusskörper gebildet, wobei der Verschlusskörper gleichzeitig auch die Abgasleitung freilassen oder blockieren kann. Der Verschlusskörper kann beispielsweise eine Klappe, ein Ventil oder einen Rotationskörper, insbesondere eine drehbare Schlitzrolle, umfassen.

Die Steuereinrichtung kann dazu eingerichtet sein, einige oder jeden der verschließbaren Abgas-Auslässe abhängig von einer gewünschten Ausgabeleistung zu einem variablen Anteil zu schließen. So wird eingestellt, in welchen Anteilen Abgas zum Abgassammelrohr oder über die zugehörige Abgasleitung ausgegeben wird. Insbesondere kann die Steuereinrichtung einstellen, dass einer Motoreinheit mehr Kraftstoff zugeführt wird als einer darauffolgenden Motoreinheit; die darauffolgende Motoreinheit erhält hier einen einstellbaren Anteil an Abgas der zuvor genannten Motoreinheit, so dass ihre Drehkolben sowohl vom Abgas der vorherigen Motoreinheit als auch durch die direkt über den Einlass vom Sammelrohr eingeleiteten Fluide (entweder Abgas oder zu verbrennende Substanzen) angetrieben werden.

Die Steuereinrichtung kann (insbesondere durch den verschließbaren Abgas-Auslass einer ersten Motoreinheit) einstellen, dass von der ersten Motoreinheit eine umso größere Abgasausgabe zu einer darauffolgenden zweiten Motoreinheit und eine entsprechend geringere Abgasausgabe zum Abgassammelrohr erfolgt, je kleiner die Kraftstoffmenge ist, die zur zweiten Motoreinheit geleitet wird. Diese Steuerung kann zumindest für einen bestimmten Betriebsbereich vorgesehen sein. Die zweite Motoreinheit wird hier also auch als Verbrennungsmotor betrieben.

Sind mindestens drei Motoreinheiten vorhanden, kann vorgesehen sein, dass zu dem Einströmbereich einer der Motoreinheiten die Abgasleitungen von zwei anderen Motoreinheiten führen. Diese Motoreinheit, die von zwei anderen Motoreinheiten Abgase parallel empfangen kann, wird in einem Teillastbetrieb vorzugsweise als Entspannungsmotor betrieben. So kann erreicht werden, dass auch bei Teillast möglichst von jeder als Verbrennungsmotor betriebenen Motoreinheit Abgase zu einer als Entspannungsmotor betriebenen Motoreinheit geleitet werden können. Werden beispielsweise zwei von drei verfügbaren Motoreinheiten als Verbrennungsmotoren betrieben, können nur dann diese zwei Motoreinheiten Abgas zu einer als Entspannungsmotor betriebenen Motoreinheit weitergeben, wenn diese letztgenannte Motoreinheit zwei Zuleitungen für Abgase zweier Motoreinheiten umfasst. Entsprechendes gilt für Ausführungen mit mehr als drei Motoreinheiten.

Jede Motoreinheit kann über eine Brennkammer verfügen, in welche der jeweilige Einlass mündet. Von der Brennkammer können zwei Kanäle zur Mantelfläche des Arbeitsraums führen, in dem sich die Drehkolben befinden. Die Kanäle können so ausgerichtet sein, dass ihre Längsachsen radial weiter außen an den Drehachsen der beiden Drehkolben vorbei zeigen. In dieser Weise wird eine Einströmrichtung von Abgas zu den Drehkolben vorgegeben, welche die Rotation der Drehkolben unterstützt.

Insbesondere um thermische Schäden an Dichtleisten der Drehkolben zu vermeiden, kann eine Kühlung des Einströmbereichs des Arbeitsraums vorgesehen sein. Hierzu kann eine Kraftstoffleitung benachbart zum Einströmbereich führen. Die Kraftstoffleitung kann in dem Gehäuse, das den Arbeitsraum bildet, geformt sein und insbesondere durch keine dazwischen liegenden Komponenten vom Einströmbereich getrennt sein. Beispielsweise können Bohrungen im Gehäuse als Kraftstoffleitung gebildet sein. Um eine unbeabsichtigte Fremdzündung zu vermeiden, kann eine Kraftstoffleitung auch benachbart zu einer optionalen Brennkammer vorm Arbeitsraum verlaufen. Anstelle von einer Kraftstoffleitung kann prinzipiell auch eine andere Fluid- oder Flüssigkeitsleitung in der beschriebenen Führung zur Kühlung eingesetzt werden. Damit eine Motoreinheit für die verschiedenen beschriebenen Betriebsweisen eingesetzt werden kann, ist wichtig, dass sie über einen großen Druckbereich hinweg effizient arbeiten kann, das heißt mit geringer Reibung bei dennoch guter Dichtung der Drehkolben zur Wand des Arbeitsraums. Reibung entsteht bei herkömmlichen Gestaltungen zu einem wesentlichen Teil durch die Dichtung der Drehkolben zur umgebenden Wand. Vor diesem Hintergrund kann es bevorzugt sein, wenn jeder Drehkolben mindestens zwei Hohlräume aufweist, in denen jeweils ein elastischer Schlauch oder eine elastische Stange aufgenommen ist, und jeder Drehkolben an seinem Außenumfang mindestens zwei Dichtleisten aufweist, welche in die Hohlräume hineinragen und durch den darin aufgenommenen elastischen Schlauch oder die Stange radial nach außen gedrückt werden. Eine Längsachse des elastischen Schlauchs steht somit im Wesentlichen parallel zur Rotationsachse der Drehkolben. Ein solcher Schlauch bietet über seine gesamte Länge einen gleichmäßigen Druck auf die zugehörige Dichtleiste. Dabei kann der Schlauch aus Gummi oder Kunststoff und jedenfalls ohne Metall gebildet sein, womit im Falle eines Bruchs des Schlauchs keine Gefahr besteht, dass Metallsplitter frei durch den Motor geschleudert werden und dort weitere Schäden anrichten. Daher ist ein solcher elastischer (hohler) Schlauch oder eine solche elastische (massive) Stange den herkömmlicherweise verwendeten Spiralfedern oder Blattfedern überlegen. Die Federung von Dichtungen über solche elastischen Schläuche kann insbesondere so erfolgen, wie von der Anmelderin in der Europäischen Patentanmeldung EP18156764.5, eingereicht am 14. Februar 2018, beschrieben.

Wird weniger als die Hälfte der Motoreinheiten als Verbrennungsmotoren betrieben, so können drei oder mehr Motoreinheiten in Reihe geschaltet werden. Hierbei wird also Abgas von einer als Verbrennungsmotor betriebenen Motoreinheit zunächst durch zwei oder mehr als Entspannungsmotoren betriebene Motoreinheiten geleitet, ehe es über den Abgas-Auslass dieser letzten Motoreinheit in das Abgassammelrohr geleitet wird.

Die Steuereinrichtung kann auch dazu eingerichtet sein, bei einem Umschalten des Betriebs einer Motoreinheit von einem Betrieb als Verbrennungsmotor zu einem Betrieb als Entspannungsmotor gleichzeitig eine Übersetzung, mit welcher diese Motoreinheit zu einer gemeinsamen Antriebswelle mehrerer oder aller Motoreinheiten gekoppelt ist, umzuschalten. Insbesondere kann die Übersetzung so verändert werden, dass eine Umdrehung dieser Motoreinheit nur eine geringere Drehung der Antriebswelle bewirkt als bei einem Betrieb dieser Motoreinheit als Verbrennungsmotor. Hierdurch kann berücksichtigt werden, dass eine Strömungsgeschwindigkeit bzw. Druck von Abgas bei einem seriellen Betrieb von zwei oder mehr Motoreinheiten über jede Motoreinheit abnimmt.

Die Motoreinheiten können sich auch im Arbeitsvolumen unterscheiden, das heißt in der Größe des Arbeitsraums, welcher nicht von den Drehkolben belegt wird. Hierzu können entweder die Drehkolben unterschiedlicher Motoreinheiten verschiedene Größen haben oder die Arbeitsräume unterschiedlicher Motoreinheiten haben verschiedene Größen. Bei einem Umschalten einer Motoreinheit von einem Betrieb als Verbrennungsmotor zu einem Betrieb als Entspannungsmotor können kann zunächst eine solche Motoreinheit ausgewählt werden, die ein kleineres Arbeitsvolumen als andere Motoreinheiten hat. Erst wenn alle Motoreinheiten mit kleinerem Arbeitsvolumen zu einem Betrieb als Entspannungsmotor umgeschaltet wurden und nun für eine gewünschte reduzierte Leistungsausgabe noch mehr Motoreinheiten umgeschaltet werden sollen, wird damit begonnen, eine Motoreinheit mit größerem Arbeitsvolumen umzuschalten.

Außer den beschriebenen Motoreinheiten kann der Verbrennungsmotor auch Zusatzmotoreinheiten umfassen, die jeweils die beschriebenen Drehkolben umfassen und mit der gemeinsamen Antriebswelle verbunden sind. Als möglicher Unterschied zu den bisher beschriebenen Motoreinheiten können diese Zusatzmotoreinheiten insbesondere allein von Abgas der zuvor beschriebenen Motoreinheiten versorgt werden und demgemäß nicht den beschriebenen Einlass umfassen.

Der Ausdruck Entspannungsmotor soll verdeutlichen, dass hier eine Energienutzung durch die Entspannung der Abgase einer anderen Motoreinheit erfolgen soll, während beim Betrieb als Verbrennungsmotor die durch Verbrennung freigesetzte Energie direkt von der Motoreinheit, und nicht erst von einer anderen Motoreinheit, genutzt wird. Als Unterscheidungsmerkmal wird vorliegend unter einem Betrieb als Verbrennungsmotor verstanden, dass der Einlass zum Zuleitungsrohr geöffnet wird (bzw. pro Zündungstakt zumindest einmal geöffnet und geschlossen wird), während beim Betrieb als Entspannungsmotor der Einlass durchgängig geschlossen ist, das heißt über den gesamten Verbrennungstakt einer anderen Motoreinheit geschlossen bleibt.

Der verschließbare Abgas-Auslass kann einen prinzipiell beliebig geformten, bewegbaren Verschlusskörper aufweisen. Es kann sich beispielsweise um eine Klappe, ein Ventil oder eine drehbare Schlitzrolle handeln. Der Verschlusskörper kann auch dazu gestaltet sein, je nach Position die von derselben Motoreinheit abgehende Abgasleitung zu öffnen oder zu schließen. Alternativ kann hierzu auch ein weiterer Verschlusskörper vorgesehen sein. Prinzipiell ist es auch möglich, dass ein bewegbarer Verschluss einer Abgasleitung auch an ihrem Ende, das in die darauffolgende Motoreinheit mündet, vorgesehen ist.

Das Zuleitungsrohr kann auch als Common Rail bezeichnet werden. Es weist zu jeder Motoreinheit jeweils eine Fluidverbindung auf, über welche je nach Ausführungsform verschiedene Fluide in die Motoreinheiten geleitet werden. Um einen genügenden Druck im Zuleitungsrohr aufzubauen, kann ein Kompressor oder ein Verdichter, der zwei Drehkolben in gleicher Weise wie die übrigen Motoreinheiten umfasst, vorgesehen sein. Der Verdichter kann mit den Motoreinheiten gekoppelt sein, um so angetrieben zu werden.

Die parallele Verbindung der Motoreinheiten soll ausdrücken, dass jede Motoreinheit mit einem gemeinsamen Zuleitungsrohr und einem gemeinsamen Abgassammelrohr verbunden ist, ohne dass ein Fluid vom Zuleitungsrohr zunächst durch eine Motoreinheit strömen müsste, um eine andere Motoreinheit zu erreichen. Die serielle Verbindung (Reihenverbindung) über die Abgasleitungen zwischen den Motoreinheiten soll hingegen so verstanden werden, dass hierbei ein Fluid vom Zuleitungsrohr zunächst durch eine erste Motoreinheit strömt (dort verbrannt wird, falls das Fluid nicht bereits im Zuleitungsrohr oder einer Vorkammer vor der ersten Motoreinheit entzündet wurde) und sodann durch die zweite Motoreinheit strömt.

Die Steuereinrichtung kann eine Elektronik umfassen, wobei die Funktionsweise der Steuereinrichtung zu beliebigen Anteilen in Software oder Hardware programmiert sein kann. In Abwandlungen kann auch vorgesehen sein, dass sich die Betriebe als Verbrennungsmotor und als Entspannungsmotor darin unterscheiden, ob Kraftstoff in der jeweiligen Motoreinheit verbrannt wird, wobei in beiden Betriebsmodi der Einlass geöffnet (und wieder geschlossen) wird.

Die "gewünschte Ausgabeleistung" kann als eine vorgegebene Ziel-Ausgabeleistung des Verbrennungsmotors verstanden werden, insbesondere auch als ein Ziel-Drehmoment der Antriebswelle.

Die als zusätzliche Merkmale des erfindungsgemäßen Verbrennungsmotors beschriebenen Eigenschaften ergeben bei bestimmungsgemäßer Verwendung auch Varianten des erfindungsgemäßen Verfahrens. Insbesondere ergibt der Gebrauch der beschriebenen Steuereinrichtung entsprechende Verfahrensvarianten. Umgekehrt kann die Steuereinrichtung dazu gestaltet sein, beschriebene Verfahrensvarianten auszuführen, insbesondere durch entsprechende Steuerung der verschließbaren Einlässe und Abgas-Auslässe sowie von Kraftstoffeinspritzungen und -entzündungen.

Weitere Vorteile und Merkmale der Erfindung werden nachstehend mit Bezug auf die beigefügten schematischen Figuren beschrieben.
- Fig. 1: ist eine schematische Darstellung eines Ausführungsbeispiels eines erfindungsgemäßen Verbrennungsmotors;
- Fig. 2: ist eine schematische Querschnittsansicht einer Motoreinheit eines erfindungsgemäßen Verbrennungsmotors;
- Fig. 3: ist eine weitere schematische Querschnittsansicht einer Motoreinheit eines erfindungsgemäßen Verbrennungsmotors;
- Fig. 4: ist ein vergrößerter Ausschnitt aus Fig. 3 und
- Fig. 5: ist eine schematische Querschnittsansicht eines weiteren Ausführungsbeispiels einer Motoreinheit eines erfindungsgemäßen Verbrennungsmotors.

Gleiche Bezugszeichen kennzeichnen in den Figuren in der Regel gleiche oder einander entsprechende Komponenten.

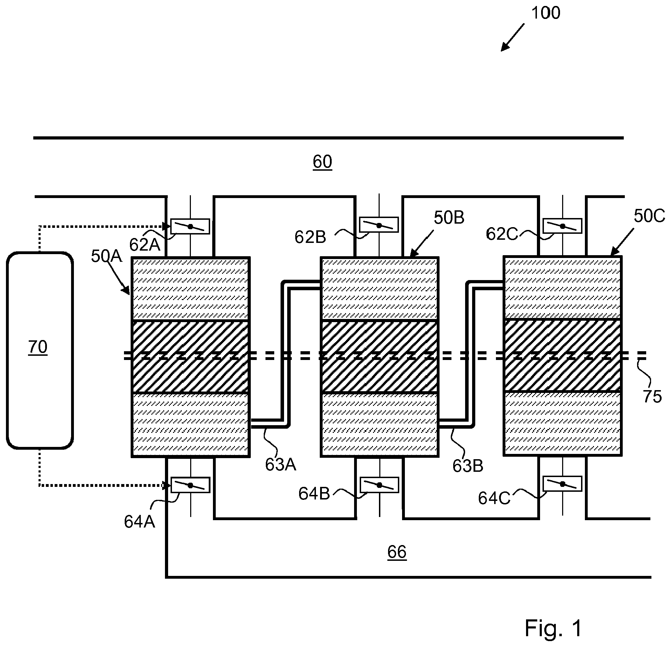

Fig. 1 zeigt ein erfindungsgemäßes Ausführungsbeispiel eines Verbrennungsmotors 100. Dieser umfasst mehrere Motoreinheiten 50A-50C, welche jeweils Drehkolbenmotoren mit mindestens zwei ineinandergreifenden Drehkolben sind. Im Beispiel von Fig. 1 sind eine erste Motoreinheit 50A, eine zweite Motoreinheit 50B und eine dritte Motoreinheit 50C gezeigt. Weitere Motoreinheiten können sich hieran anschießen. Der Aufbau der Motoreinheiten 50A-50C wird später näher beschrieben. Ein gemeinsames Zuleitungsrohr 60 ist mit jeder der Motoreinheiten 50A-50C verbunden. Je nach Gestaltung der Motoreinheiten 50A-50C wird über das Zuleitungsrohr Frischluft oder ein Kraftstoff-Luft-Gemisch geleitet. Es kann auch vorgesehen sein, dass ein Kraftstoff-Luft-Gemisch bereits in dem Zuleitungsrohr 60 entzündet wird und sodann die entstehenden Abgase / Verbrennungsfluide in die Motoreinheiten 50A-50C eingeleitet werden.

Ein Abgassammelrohr 66 kann von den Motoreinheiten 40A-50C ausgegebene Abgase über entsprechende Abgas-Auslässe 64A-64C empfangen.

Die Einlässe 62A-62C vom Zuleitungsrohr 60 zu den Motoreinheiten 50A-50C sind als verschließbare Einlässe gestaltet. Ebenso können die Abgas-Auslässe 64A-64C verschließbar gestaltet sein. Diese werden über eine Steuereinrichtung 70 gesteuert.

Weiterhin sind eine Abgasleitung 63A von der ersten Motoreinheit 50A zur zweiten Motoreinheit 50B und eine weitere Abgasleitung 63B von der zweiten Motoreinheit 50B zur dritten Motoreinheit 50C vorhanden. Die dritte Motoreinheit 50C (oder allgemein letzte Motoreinheit) kann optional wiederum eine nicht dargestellte Abgasleitung zur ersten Motoreinheit 50A umfassen.

Über die Abgasleitung 63A gelangt Abgas, das die Drehkolben der ersten Motoreinheit 50A angetrieben hat, in die zweite Motoreinheit 50B und treibt deren Drehkolben an. In dieser Weise kann die zweite Motoreinheit 50B Abgasenergie der ersten Motoreinheit 50A nutzen.

Die Steuereinrichtung 70 kann nun für jede Motoreinheit variabel zwischen zwei Betriebsmodi wechseln, das heißt während dem laufenden Betrieb des Verbrennungsmotors 100 wechseln. Im ersten Betriebsmodus wird ein Einlass 62B, 62C zu einer Motoreinheit 50B, 50C geöffnet (und demnach wird diese Motoreinheit über die Verbrennung eines Kraftstoff-Luft-Gemisches direkt angetrieben). Hingegen wird im zweiten Betriebsmodus der Einlass 62B, 62C der jeweiligen Motoreinheit 50B, 50C geschlossen und diese Motoreinheit 50B, 50C dementsprechend allein von Abgasen einer vorausgehenden Motoreinheit 50A, 50B angetrieben. Der erste Betriebsmodus wird vorliegend auch Betrieb als Verbrennungsmotor genannt, während der zweite Betriebsmodus auch Betrieb als Entspannungsmotor genannt wird.

Im dargestellten Beispiel führt zur ersten Motoreinheit 50A keine Abgasleitung einer anderen Motoreinheit 50B, 50C, so dass die Motoreinheit 50A stets als Verbrennungsmotor und nicht als Entspannungsmotor betreibbar ist, während für alle übrigen Motoreinheiten 50B, 50C diese Wahl besteht. Bei anderen Ausführungen kann auch für die erste Motoreinheit 50A eine solche Wahl vorgesehen sein.

Für die Abgasleitungen 63A, 63B kann ebenfalls ein bewegbarer Verschluss vorgesehen sein. Auch kann vorgesehen sein, dass ein Verschluss einer Abgasleitung 63A und der verschließbare Auslass 63A durch eine gemeinsame Komponente gebildet sind, beispielsweise durch eine Klappe oder einen anderen bewegbaren Körper, der abhängig von seiner Position einen von beiden freilässt und den anderen schließt, oder in Zwischenstellungen beide zu variablen Anteilen öffnet.

Die Steuereinrichtung 70 kann nun einstellen, ob die Motoreinheiten 50A-50C parallel betrieben werden, indem alle Einlässe 62A-62C geöffnet werden, oder seriell betrieben werden, indem beispielsweise ein Einlass 62A geöffnet wird und die übrigen Einlässe 62B, 62C geschlossen werden.

Es kann vorgesehen sein, dass der erste Abgas-Auslass 64A zum Abgassammelrohr 66 immer geschlossen wird, wenn der zweite Einlass 62B geschlossen wird. So gelangt das gesamte Abgas der ersten Motoreinheit 50A zur zweiten Motoreinheit 50B. Entsprechendes kann für die darauffolgenden Motoreinheiten gelten.

Für einen Volllastbetrieb können insbesondere alle Einlässe 62A-62C geöffnet werden (das heißt entsprechend den Verbrennungszyklen in jedem Zyklus zu öffnen und wieder zu schließen). Mit abnehmender auszugebender Leistung bleiben immer mehr der Einlässe 62A-62C geschlossen, so dass die entsprechenden Motoreinheiten allein durch die Abgase einer anderen Motoreinheit angetrieben werden und so zur Effizienzsteigerung beitragen.

Sämtliche Motoreinheiten 50A-50C können mit einer gemeinsamen Antriebswelle 75 gekoppelt sein. Hierbei stehen alle Motoreinheiten stets unter Druck der Abgase, im Gegensatz zu üblichen Mehrzylinder-Hubkolbenmotoren, wo momentan nicht genutzte Kolben nicht unter Druck stehen und energieverbrauchend mitgeschleppt werden müssen.

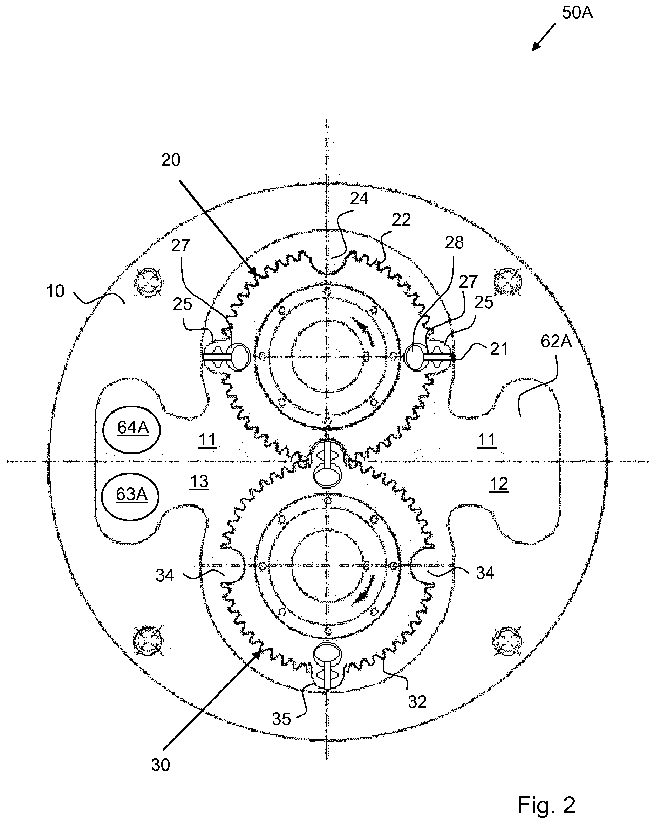

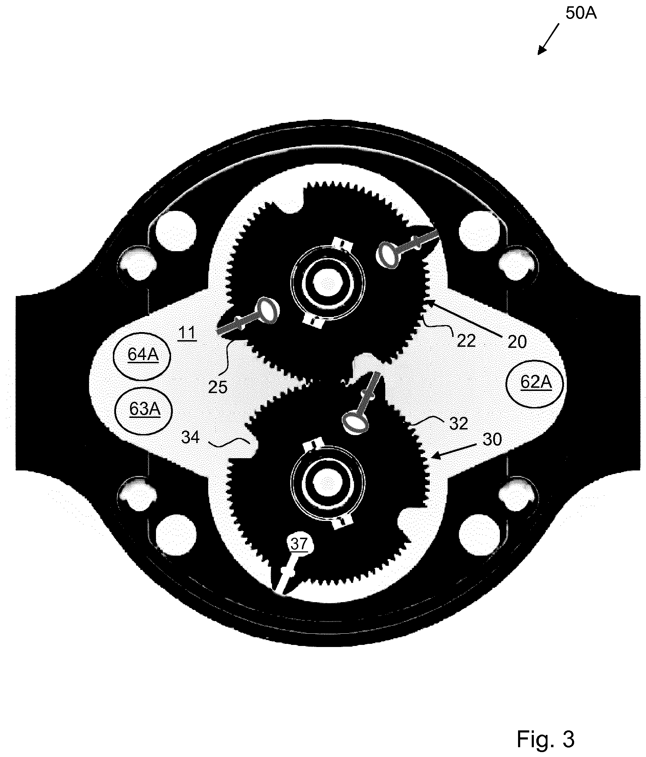

Ein beispielhafter Aufbau einer Motoreinheit 50A wird näher mit Bezug auf die Figuren 2 und 3 beschrieben. Die folgenden Ausführungen können genauso für die übrigen Motoreinheiten gelten. Die Motoreinheit 50A umfasst zwei Drehkolben 20, 30, die gemeinsam rotieren und von einem durchströmenden Fluid angetrieben werden. Die Drehachsen beider Drehkolben 20, 30 verlaufen durch die jeweiligen Mittelpunkte der Drehkolben 20, 30. Die Querschnittsdarstellungen der Figuren 2 und 3 sind Schnittansichten senkrecht zu diesen Drehachsen.

Die Motoreinheit 50A umfasst ein Gehäuse 10, welches in seinem Inneren einen Innenraum 11 bildet. Der Innenraum 11 kann bis auf den Einlass 62A, den Abgas-Auslass 64A und die Verbindung zur Abgasleitung 63A fluiddicht gebildet sein. Im Innenraum 11 sind die beiden Drehkolben 20, 30 so angeordnet, dass sie jeweils einen dichtenden Kontakt zur Wand des Innenraums 11 bilden und auch einander dichtend berühren, unabhängig von ihrer momentanen Rotationsstellung. Wird ein Fluid durch den Einlass 62A in den Innenraum 11 geleitet, so kann es folglich nur zum Abgas-Auslass 64A und zur Abgasleitung 63A gelangen, wenn es an den Drehkolben 20, 30 entlang strömt und diese in Rotation versetzt. Der Innenraum 11 wird daher vorliegend auch als Arbeitsraum 11 bezeichnet. Der mit dem Einlass 62A verbundene Bereich des Innenraums 11 bis zu den Drehkolben 20, 30 wird als Einströmbereich 12 bezeichnet. Hingegen wird der mit dem Abgas-Auslass 64A verbundene Teil des Arbeitsraums 11 bis zu den Drehkolben 20, 30 als Ausströmbereich 13 bezeichnet. Die Rotationsenergie der Drehkolben 20, 30 kann in prinzipiell bekannter Weise für an sich beliebige Einsatzzwecke genutzt werden, beispielweise als mechanischer Antrieb oder zur Erzeugung elektrischer Energie mittels eines Generators.

Die beiden Drehkolben 20, 30 haben den gleichen Durchmesser und haben an ihrem Außenumfang jeweils einen Zahnkranz 22, 32. Die beiden Zahnkränze 22, 32 greifen ineinander. Hierdurch wird eine Dichtung zwischen den beiden Drehkolben 20, 30 erreicht und ein Fluiddurchtritt an dieser Stelle verhindert. Außerdem drehen sich die beiden Drehkolben 20, 30 durch die Zahnkränze 22, 32 synchron, mit entgegengesetztem Drehsinn.

Zusätzlich hat jeder Drehkolben 20, 30 jeweils zwei Auswölbungen 25, 35, die über den jeweiligen Zahnkranz 22, 32 radial nach außen hervorstehen. Außer durch die Auswölbungen 25, 35 sind die beiden Zahnkränze 22, 32 auch von zwei Mulden 24, 34 unterbrochen. In den Bereichen der Mulden 24, 34 hat der jeweilige Drehkolben 20, 30 also einen kleineren Radius. Bei einer gemeinsamen Rotation der Drehkolben 20, 30 greift die Auswölbung 35 von einem der Drehkolben 30 in die Mulde 24 des anderen Drehkolben 20 ein, und umgekehrt.

Jede Auswölbung 25, 35 hat einen Schlitz, insbesondere in radialer Richtung. In jedem Schlitz ist eine Dichtleiste 21, 31 angeordnet, welche aus dem Schlitz nach außen hervorragt. Die Dichtleisten 21, 31 können je nach Drehstellung der Drehkolben 20, 30 die Wand des Innenraums dichtend berühren.

Die Gestaltung der Dichtleiste sowie ihre Halterung und Federung sind von großer Bedeutung für Reibungs- und Dichtungseigenschaften des Motors, wodurch die Effizienz des Motors maßgeblich bestimmt wird.

Die Schlitze, in denen die Dichtleisten 21, 31 aufgenommen sind, münden jeweils in einen Hohlraum 27, 37. Bei herkömmlichen Drehkolbenmotoren befindet sich am Ende solcher Schlitze eine Feder, beispielsweise eine Spiralfeder oder Blattfeder. Diese verursachen jedoch einen ungleichmäßigen Druck: In Axialrichtung (aus der Zeichenebene heraus) hat eine Blattfeder nur in ihrer Mitte einen hohen Druck, der zum Rand stark abfällt. Spiralfedern wirken ebenfalls punktuell. Außerdem besteht die Gefahr, dass bei einem Bruch einer solchen Metallfeder kleine Metallpartikel in andere Motorenbereiche eindringen und schwerwiegende Schäden verursachen. Diese Nachteile werden überwunden, indem in jedem Hohlraum 27, 37 ein oder mehrere Schläuche 28, 38 angeordnet sind, die aus einem elastischen Material wie Silikon oder Gummi bestehen. Die Dichtleiste 21, 31 ragt bis an oder in den Hohlraum 27, 37 und gegen den Silikonschlauch. Dieser wird dadurch komprimiert und übt einen radial nach außen gerichteten Druck auf die Dichtleiste 21, 31 aus. In Axialrichtung kann dieser zylindrische Schlauch einen gleichen Querschnitt haben, so dass ein gleichmäßiger Druck über die Axiallänge hinweg ausgeübt wird. Zudem werden keine Metallteile verwendet, so dass bei einem Bruch des Schlauchs keine Gefahr von Folgeschäden am Motor bestehen.

In Figur 3 ist zur Veranschaulichung am Drehkolben 30 nur eine einzige Dichtleiste mit zugehörigem Schlauch gezeigt, während der zweite Hohlraum 37 und der daran angrenzende Schlitz leer dargestellt sind. Im Gebrauch sind selbstverständlich auch hier ein Schlauch als Federung im Hohlraum 37 und eine Dichtleiste im Schlitz angeordnet.

Jeder Drehkolben kann symmetrisch aufgebaut sein, das heißt die Formen der Auswölbungen, Dichtleisten und Mulden sind zur Fluid-Anströmungsseite unabhängig vom Drehsinn des Drehkolbens. Dadurch kann die Motoreinheit 50A prinzipiell in beide Drehrichtungen gleichermaßen betrieben werden. Für einen Richtungswechsel wird die Einleitung des Fluids umgekehrt, also durch den Abgas-Auslass 64A in den Innenraum 11 hinein und durch den Einlass 62A hinaus. In diesem Fall muss eine zusätzliche Brennkammer mit optionaler Zündeinrichtung zwischen den Drehkolben und dem Abgassammelrohr gebildet sein, oder es muss eine Zündung von Kraftstoff-Luft-Gemisch im als Abgassammelrohr bezeichneten Rohr erfolgen, damit das Abgas in umgekehrter Richtung durch die Motoreinheiten strömt.

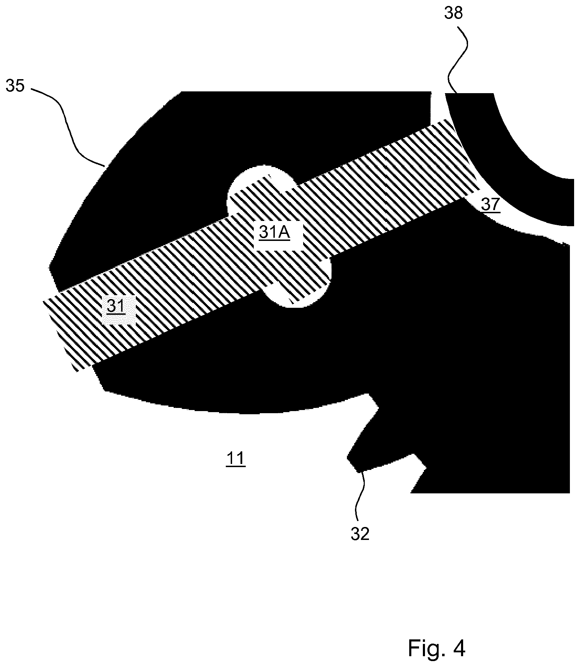

Ein vergrößerter Ausschnitt des Drehkolbens 30 ist in Fig. 4 gezeigt. Die Dichtleiste 31 ragt radial nach außen über die Auswölbung 35 hinaus und ragt nach innen in den Hohlraum 37 hinein, in welchem der hohle Schlauch 38 angeordnet ist. Die Dichtleiste 31 hat in einem mittleren Bereich eine Verdickung 31A. Der Spalt oder Schlitz für die Dichtleiste hat an entsprechender Stelle eine Ausnehmung (Haltenut), in welche die Verdickung 31A hineinragt. Die Dichtleiste 31 hat demnach einen kreuzförmigen Querschnitt. Hierdurch wird die Dichtleiste 31 im Schlitz gehalten und kann weder radial nach außen noch radial nach innen aus dem Schlitz austreten. Die Querschnittsabmessungen der Dichtleiste 31 sowie die Position der Ausnehmung am Schlitz sind so gewählt, dass die Dichtleiste 31 in den Hohlraum 37 hineinragt und (bei Stillstand der Motoreinheit) den Schlauch 38 komprimiert. Der Schlauch 38 ist demnach vorgespannt und bewirkt bei Stillstand oder beim Anlaufen der Motoreinheit einen dichtenden Kontakt der Dichtleiste 31 zur Innenwand des Gehäuses. Der Schlauch 38 hat einen runden Querschnitt, welcher ohne Vorspannung kreisförmig sein kann und durch die Vorspannung gegen die Dichtleiste 31 eine eingewölbte oder ovale Form haben kann. Bei höheren Drehzahlen des Motors bewirken auch die Fliehkräfte einen Druck der Dichtleiste nach außen und stellen somit eine dichtende Wirkung bereit. Damit der Druck der Dichtleisten nach außen nicht unnötig groß wird und unnötige Reibung erzeugt, wird durch die Verdickung 31A ein Bewegungsraum der Dichtleiste 31 nach außen begrenzt. Wird bei höheren Fliehkräften die Dichtleiste 31 durch ihr Eigengewicht nach außen gedrückt, wird hierdurch der Silikonschlauch 38B entlastet, was sich positiv auf die Lebensdauer des Silikonschlauchs 38 auswirkt.

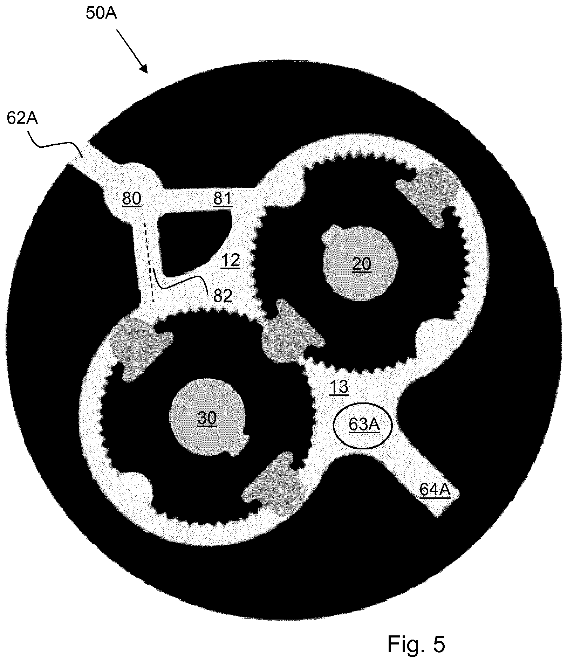

Fig. 5 zeigt einen Querschnitt einer Motoreinheit 50A einer weiteren Ausführungsform. Hier umfasst die Motoreinheit 50A eine Brennkammer 80, die sich zwischen dem verschließbaren Einlass 62A und dem Arbeitsraum 11 der Drehkolben befindet. Eine Zündeinrichtung kann an der Brennkammer 80 angeordnet sein, um ein Kraftstoff-Luft-Gemisch, das über den Einlass 62A eingeleitet wird, zu entzünden. (Bei Ausführungen ohne separate Brennkammer 80 kann eine Zündeinrichtung auch am Einströmbereich 12 des Arbeitsraums vorgesehen sein, um dort das Kraftstoff-Luft-Gemisch zu entzünden.) Von der Brennkammer 80 gelangen die durch die Verbrennung entstehenden Abgase durch zwei Kanäle 81 und 82 zum Arbeitsraum. Durch die Ausrichtung der Kanäle 81 und 82 soll ein Strömen des Abgases gegen die Auswölbungen der Drehkolben gefördert werden. Hierzu ist die jeweilige Längsachse von jedem Kanal 81, 82 so ausgerichtet, dass sie etwa senkrecht zu den Drehachsen der Drehkolben verläuft und radial weiter außen an den Drehachsen vorbeiläuft. Die Längsachse des Kanals 82 ist in Fig. 5 als gestrichelte Linie dargestellt. Wie dargestellt, läuft diese Längsachse nicht auf den Mittelpunkt des Drehkolbens 30 zu, sondern radial weiter außen vorbei (das heißt nicht zwischen den beiden Drehkolben, sondern auf einer Seite des Drehkolbens 30, die entfernt vom anderen Drehkolben 20 ist). In dieser Weise wird ein stärkerer Druck auf die Auswölbungen an den Drehkolben ausgeübt.

Auf eine Brennkammer 80 mit Zündeinrichtung kann auch verzichtet werden, wenn in dem davor befindlichen Zuleitungsrohr eine Entzündung eines Kraftstoff-Luft-Gemisches erfolgt. Die Ausrichtung der Kanäle 81, 82 kann auch in diesem Fall wie zu Fig. 5 beschrieben sein.

Eine Abgasleitung kann von einer vorausgehenden Motoreinheit entweder in die Brennkammer 80 oder direkt in den Einströmbereich 12 münden (nicht dargestellt). Eine Mündung in die Brennkammer 80 kann vorteilhaft sein, damit dort auch eine Mischung mit dem Kraftstoff-Luft-Gemisch erfolgen kann.

Indem bei den Motoreinheiten des erfindungsgemäßen Verbrennungsmotors zwischen einem parallelen und einem seriellen Betrieb geschaltet werden kann, und so einige Motoreinheiten entweder nur von Abgas einer vorherigen Motoreinheit oder direkt von den durch Verbrennung entstehenden Abgasen durchströmt werden, kann ein verbesserter Wirkungsgrad über einen großen Leistungsausgabebereich erreicht werden.

## Patentansprüche

1. Verbrennungsmotor, umfassend
- mehrere Motoreinheiten (50A-50C) mit jeweils:
• einem Arbeitsraum (11), in dem zwei Drehkolben (20, 30) ineinandergreifend angeordnet sind und so den Arbeitsraum (11) in einen Einströmbereich (12) und einen Ausströmbereich (13) teilen, wobei die Drehkolben (20, 30) von durchströmendem Fluid antreibbar sind,
• einem verschließbaren Einlass (62A-62C), der zum Einströmbereich (12) führt, und
• einem verschließbaren Abgas-Auslass (64A-64C), der vom Ausströmbereich (13) wegführt,
- ein Zuleitungsrohr (60), welches mit den Einlässen (62A-62C) verbunden ist, und ein Abgassammelrohr (66), das mit den Abgas-Auslässen (64A-64C) verbunden ist, so dass die Motoreinheiten (50A-50C) parallel zueinander verbunden sind,
- Abgasleitungen (63A, 63B), die jeweils von einem Ausströmbereich (13) einer der Motoreinheiten (50A, 50B) zu einem Einströmbereich (12) einer anderen der Motoreinheiten (50B, 50C) führen, womit eine serielle Verbindung zwischen den Motoreinheiten (50A-50C) hergestellt ist, und
- eine Steuereinrichtung (70), welche dazu eingerichtet ist, zumindest einen Teil der Motoreinheiten (50B, 50C) abhängig von einer gewünschten Leistungsausgabe entweder als Verbrennungsmotor zu betreiben, wobei der Einlass (62B-62C) der jeweiligen Motoreinheit (50B, 50C) zum Zuleitungsrohr (60) geöffnet wird, oder als Entspannungsmotor zu betreiben, wobei der jeweilige Einlass (62B-62C) geschlossen bleibt und die jeweiligen Drehkolben (20, 30) vielmehr durch Abgas, das über die jeweilige Abgasleitung (63A, 63B) einströmt, angetrieben werden.

2. Verbrennungsmotor nach Anspruch 1,
**dadurch gekennzeichnet,**
**dass** die Steuereinrichtung (70) dazu eingerichtet ist, den Abgas-Auslass (64A-64C) einer der Motoreinheiten (50A, 50B) zum Abgassammelrohr (66) zu schließen und Abgas allein über die zugehörige Abgasleitung (63A, 63B) zur darauffolgenden Motoreinheit (50B, 50C) zu leiten, wenn diese darauffolgende Motoreinheit (50B, 50C) als Entspannungsmotor betrieben wird.

3. Verbrennungsmotor nach einem der vorhergehenden Ansprüche,
**dadurch gekennzeichnet,**
**dass** über das Zuleitungsrohr (60) Frischluft zugeführt wird,
**dass** jede Motoreinheit (50A-50C) eine Einspritzdüse zum Einspritzen von Kraftstoff umfasst, welcher innerhalb der Motoreinheit (50A-50C) verbrannt wird,
**dass** die Steuereinrichtung (70) dazu eingerichtet ist, bei einem Betrieb einer Motoreinheit (50A-50C) als Verbrennungsmotor Kraftstoff einzuspritzen und ihren Einlass (62A-62C) zum Zuleitungsrohr (60) zu öffnen, und bei einem Betrieb einer Motoreinheit (50B, 50C) als Entspannungsmotor keinen Kraftstoff einzuspritzen und den Einlass (62A-62C) nicht zu öffnen.

4. Verbrennungsmotor nach Anspruch 1 oder 2,
**dadurch gekennzeichnet,**
**dass** über das Zuleitungsrohr (60) ein Kraftstoff-Luft-Gemisch zugeführt wird, dass die Steuereinrichtung (70) dazu eingerichtet ist, bei einem Betrieb einer Motoreinheit (50A-50C) als Verbrennungsmotor über den Einlass (62A-62C) das Kraftstoff-Luft-Gemisch einzuleiten und in dieser Motoreinheit (50A-50C) zu verbrennen, und bei einem Betrieb einer Motoreinheit (50B-50C) als Entspannungsmotor kein Kraftstoff-Luft-Gemisch über den verschließbaren Einlass (62A-62C) einzulassen und stattdessen den Abgas-Auslass (64A-64B) einer jeweils vorhergehenden Motoreinheit (50A-50B) zu schließen, um Abgas der vorhergehenden Motoreinheit (50A-50B) über die zugehörige Abgasleitung (63A, 63B) zu empfangen.

5. Verbrennungsmotor nach einem der vorhergehenden Ansprüche,
**dadurch gekennzeichnet,**
**dass** die Steuereinrichtung (70) dazu eingerichtet ist,
- bei einem Volllastbetrieb alle Motoreinheiten (50A-50C) als Verbrennungsmotoren zu betreiben,
- bei einem Teillastbetrieb, bei dem eine Hälfte an Motoreinheiten als Verbrennungsmotoren betrieben werden sollen, solche Motoreinheiten zum Betrieb als Verbrennungsmotoren auszuwählen, dass sich zwischen zwei als Verbrennungsmotoren betriebenen Motoreinheiten (50A, 50C) stets eine als Entspannungsmotor betriebene Motoreinheit (50B) befindet.

6. Verbrennungsmotor nach einem der vorhergehenden Ansprüche,
**dadurch gekennzeichnet,**
**dass** in der Steuereinrichtung (70) Betriebseinstellungen hinterlegt sind, welche in Abhängigkeit der gewünschten Leistungsausgabe festlegen, wieviel Abgas von einer der Motoreinheiten (50A-50C) zur jeweils nächsten geleitet wird und ob beziehungsweise wieviel Kraftstoff in die jeweilige Motoreinheit (50A-50C) eingeleitet wird.

7. Verbrennungsmotor nach einem der vorhergehenden Ansprüche,
**dadurch gekennzeichnet,**
**dass** die Motoreinheiten (50A-50C) jeweils einen bewegbaren Verschlusskörper umfassen, welcher zwischen verschiedenen Positionen bewegbar ist, in denen er entweder den Abgas-Auslass (64A-64C) zum Abgassammelrohr (66) verschließt und die Abgasleitung (63A, 63B) zu einer darauffolgenden Motoreinheit (50B-50C) freilässt, oder den Abgas-Auslass (64A-64C) zum Abgassammelrohr (66) freilässt und die Abgasleitung (63A, 63B) zu einer darauffolgenden Motoreinheit (50B-50C) verschließt.

8. Verbrennungsmotor nach einem der vorhergehenden Ansprüche,
**dadurch gekennzeichnet,**
**dass** die Steuereinrichtung (70) dazu eingerichtet ist, mit kleiner werdender gewünschter Ausgabeleistung den Betrieb von immer mehr der Motoreinheiten (50A-50C) von einem Betrieb als Verbrennungsmotor zu einem Betrieb als Entspannungsmotor zu wechseln.

9. Verbrennungsmotor nach einem der vorhergehenden Ansprüche,
**dadurch gekennzeichnet,**
**dass** die Steuereinrichtung (70) dazu eingerichtet ist, eine umso größere Abgasausgabe von einer ersten Motoreinheit (50A) zu einer darauffolgenden zweiten Motoreinheit (50B) und eine entsprechend geringere Abgasausgabe von der ersten Motoreinheit (50A) zum Abgassammelrohr (66) einzustellen, je kleiner die Kraftstoffmenge ist, die zur zweiten Motoreinheit (50B) geleitet wird.

10. Verbrennungsmotor nach einem der vorhergehenden Ansprüche,
**dadurch gekennzeichnet,**
**dass** mindestens drei Motoreinheiten (50A-50C) vorhanden sind und dass zu dem Einströmbereich (12) einer der Motoreinheiten die Abgasleitungen von zwei anderen Motoreinheiten führen.

11. Verbrennungsmotor nach einem der vorhergehenden Ansprüche,
**dadurch gekennzeichnet,**
**dass** jede Motoreinheit (50A-50C) über eine Brennkammer (80) verfügt, in welche der jeweilige Einlass (62A-62C) mündet, wobei von der Brennkammer (80) zwei Kanäle (81, 82) zur Mantelfläche des Arbeitsraums (11) führen, wobei die Kanäle (81, 82) so ausgerichtet sind, dass ihre Längsachsen radial weiter außen an den Drehachsen der beiden Drehkolben (20, 30) vorbei zeigen.

12. Verbrennungsmotor nach einem der vorhergehenden Ansprüche,
**dadurch gekennzeichnet,**
**dass** zur Kühlung des Einströmbereichs (12) oder einer Brennkammer (80) einer der Motoreinheiten (50A-50C) eine Kraftstoffleitung benachbart zu diesem Einströmbereich (12) oder dieser Brennkammer (80) verläuft.

13. Verbrennungsmotor nach einem der vorhergehenden Ansprüche,
**dadurch gekennzeichnet,**
**dass** jeder Drehkolben (20, 30) mindestens zwei Hohlräume (27, 37) aufweist, in denen jeweils ein elastischer Schlauch (38) oder eine elastische Stange aufgenommen ist, und an seinem Außenumfang mindestens zwei Dichtleisten (21, 31) aufweist, welche in die Hohlräume (27, 37) hineinragen und durch den darin aufgenommenen elastischen Schlauch (38) oder die Stange radial nach außen gedrückt werden.

14. Verbrennungsmotor nach einem der vorhergehenden Ansprüche,
**dadurch gekennzeichnet,**
**dass** die Steuereinrichtung (70) dazu eingerichtet ist, bei einem Umschalten des Betriebs einer Motoreinheit (50B, 50C) von einem Betrieb als Verbrennungsmotor zu einem Betrieb als Entspannungsmotor gleichzeitig auch eine Übersetzung, mit welcher diese Motoreinheit (50B, 50C) zu einer gemeinsamen Antriebswelle (75) gekoppelt ist, umzuschalten.

15. Verfahren zum Betreiben eines Verbrennungsmotors, umfassend
- mehrere Motoreinheiten (50A-50C) mit jeweils:
• einem Arbeitsraum (11), in dem zwei Drehkolben (20, 30) ineinandergreifend angeordnet sind und so den Arbeitsraum (11) in einen Einströmbereich (12) und einen Ausströmbereich (13) teilen, wobei die Drehkolben (20, 30) von durchströmendem Fluid angetrieben werden,
• einem verschließbaren Einlass (62A-62C), der zum Einströmbereich (12) führt, und
• einem verschließbaren Abgas-Auslass (64A-64C), der vom Ausströmbereich (13) wegführt,
- ein Zuleitungsrohr (60), welches mit den Einlässen (62A-62C) verbunden ist, und ein Abgassammelrohr (66), das mit den Abgas-Auslässen (64A-64C) verbunden ist, so dass die Motoreinheiten (50A-50C) parallel zueinander verbunden sind, und
- Abgasleitungen (63A, 63B), die jeweils von einem Ausströmbereich (13) einer der Motoreinheiten (50A, 50B) zu einem Einströmbereich (12) einer anderen der Motoreinheiten (50B, 50C) führen, womit eine serielle Verbindung zwischen den Motoreinheiten (50A-50C) hergestellt ist,
- wobei eine Steuereinrichtung (70) abhängig von einer gewünschten Leistungsausgabe variabel einstellt, wie viele der Motoreinheiten (50B, 50C) als Verbrennungsmotoren betrieben werden, wobei der Einlass (62B-62C) der jeweiligen Motoreinheit (50B, 50C) zum Zuleitungsrohr (60) geöffnet wird, oder als Entspannungsmotoren betrieben werden, wobei der jeweilige Einlass (62B-62C) geschlossen bleibt und die jeweiligen Drehkolben (20, 30) vielmehr durch Abgas, das über eine der Abgasleitungen (63A, 63B) von einer anderen der Motoreinheiten (50A, 50B) einströmt, angetrieben werden.
